# EUROPÄISCHE PATENTANMELDUNG

(11) **EP 4 575 465 A1**
(43) Veröffentlichungstag der Anmeldung: **25.06.2025**
(21) Anmeldenummer: 23217892.1
(22) Anmeldetag: 19.12.2023
(51) Int. Cl.: G01N 21/64, G01N 21/88, G01N 21/94, G01N 21/958

(54) **SYSTEM UND VERFAHREN ZUM PRÜFEN EINER OBERFLÄCHE EINES PRÜFOBJEKTS**

(71) Anmelder: Fraunhofer-Gesellschaft zur Förderung der angewandten Forschung e.V., 80686 München (DE)
(72) Erfinder: BUCHTA, Dominic, 79110 Freiburg (DE); BLÄTTERMANN, Alexander, 79110 Freiburg (DE); BEHRENDT, Vivien, 79110 Freiburg (DE); RADEMACHER, Christian, 79110 Freiburg (DE)
(74) Vertreter: WSL Patentanwälte Partnerschaft mbB

(57) **Zusammenfassung**

Die vorliegende Erfindung betrifft einen Lumineszenzscanner als System zum Prüfen einer Oberfläche eines Prüfobjekts, bei dem eine Ablenkeinrichtung sowohl einer Ablenkung der von einer Strahlungsquelle erzeugten Anregungsstrahlung auf die Oberfläche des Prüfobjekts als auch einer Ablenkung einer von der Oberfläche abgestrahlten erste Lumineszenzstrahlung mit einer ersten Lumineszenzwellenlänge auf den Detektor dient. Eine für die Anregungsstrahlung transparente Schutzplatte dient dem Schutz zumindest der Ablenkeinrichtung oder der Strahlungsquelle gegenüber Umgebungseinflüssen. Erfindungsgemäß weist das System weiterhin einen Kanaltrenner auf, wobei entweder der Kanaltrenner derart ausgestaltet ist, dass der Kanaltrenner in dem Betrieb des Systems verhindert, dass eine in einer auf einer Oberfläche der Schutzplatte angeordneten Substanz oder in dem Material der Schutzplatte generierte zweite Lumineszenzstrahlung mit einer zweiten Lumineszenzwellenlänge auf den Detektor trifft, oder der Kanaltrenner derart eingerichtet ist, dass der Kanaltrenner in dem Betrieb des Systems die zweite Lumineszenzstrahlung von der ersten Lumineszenzstrahlung unterscheidbar macht.

## Beschreibung

Die vorliegende Erfindung betrifft ein System zum Prüfen einer Oberfläche eines Prüfobjekts mit einer Strahlungsquelle, wobei die Strahlungsquelle derart eingerichtet ist, dass die Strahlungsquelle in einem Betrieb des Systems elektromagnetische Anregungsstrahlung mit einer Anregungswellenlänge erzeugt und abstrahlt, einem Detektor, wobei der Detektor derart angeordnet und eingerichtet ist, dass der Detektor in dem Betrieb jeweils eine Intensität einer elektromagnetischen ersten Lumineszenzstrahlung für eine Mehrzahl von Bildpunkten erfasst, wobei die erste Lumineszenzstrahlung eines Bildpunktes jeweils von einem aus der Mehrzahl von Objektpunkten abgestrahlt wird und wobei die erste Lumineszenzstrahlung eine von der Anregungswellenlänge verschiedene erste Lumineszenzwellenlänge aufweist, einer Ablenkeinrichtung, wobei die Ablenkeinrichtung derart angeordnet und eingerichtet ist, dass mit der Ablenkeinrichtung in dem Betrieb des Systems die Anregungsstrahlung zeitlich nacheinander auf eine Mehrzahl von Objektpunkten auf der Oberfläche des Prüfobjekts ablenkbar ist, und dass mit der Ablenkeinrichtung in dem Betrieb des Systems die zeitlich nacheinander von der Mehrzahl von Objektpunkten abgestrahlte erste Lumineszenzstrahlung auf den Detektor ablenkbar ist, einer Schutzplatte, wobei die Schutzplatte ein für die Anregungsstrahlung transparentes Material umfasst und wobei die Schutzplatte in einer Strahlrichtung der Anregungsstrahlung betrachtet hinter der Ablenkeinrichtung angeordnet ist, und einer Steuer- und Auswerteeinrichtung, wobei die Steuer- und Auswerteeinrichtung derart wirksam mit dem Detektor verbunden ist, dass in dem Betrieb des Systems die Steuer- und Auswerteeinrichtung von dem Detektor jeweils ein Intensitätssignal für jeden aus der Mehrzahl von Bildpunkten empfängt, wobei das Intensitätssignal die Intensität der ersten Lumineszenzstrahlung des jeweiligen Objektpunkts repräsentiert.

Darüber hinaus betrifft die vorliegende Erfindung ein Verfahren zum Prüfen einer Oberfläche eines Prüfobjekts mit den Schritten: Erzeugen und Abstrahlen von elektromagnetischer Anregungsstrahlung mit einer Anregungswellenlänge mittels einer Strahlungsquelle, Ablenken der Anregungsstrahlung zeitlich nacheinander auf eine Mehrzahl von Objektpunkten auf der Oberfläche des Prüfobjekts mittels einer Ablenkeinrichtung, Ablenken einer zeitlich nacheinander von jeweils einem Objektpunkt aus der Mehrzahl von Objektpunkten abgestrahlten ersten Lumineszenzstrahlung auf den Detektor mittels der Ablenkeinrichtung, Erfassen jeweils einer Intensität der ersten Lumineszenzstrahlung für eine Mehrzahl von Bildpunkten mittels eines Detektors, wobei die erste Lumineszenzstrahlung eine von der Anregungswellenlänge verschiedene erste Lumineszenzwellenlänge aufweist, Ausgeben jeweils eines Intensitätssignals für jeden aus der Mehrzahl von Bildpunkten, wobei das Intensitätssignal die Intensität der ersten Lumineszenzstrahlung des jeweiligen Objektpunktes repräsentiert, und Schützen zumindest der Strahlungsquelle oder der Ablenkeinrichtung vor Umgebungseinflüssen mittels einer Schutzplatte, wobei die Schutzplatte für die Anregungsstrahlung transparent ist und wobei die Schutzplatte in einer Strahlrichtung der Anregungsstrahlung betrachtet zwischen der Strahlungsquelle und der Oberfläche des Prüfobjekts angeordnet ist.

Fluoreszenzscanner, insbesondere Fluoreszenzlaserscanner, werden in der Prüftechnik zum ortsaufgelösten Prüfen der Oberfläche eines Prüfobjekts bereits in einer Vielzahl von Anwendungsszenarien eingesetzt. Beispielsweise kann mit einem Fluoreszenzlaserscanner eine Restverunreinigung in Form einer dünnen, punktuellen Ölauflage auf der Oberfläche eines Prüfobjekts ortsaufgelöst erfasst werden oder die Dicke einer organischen Beschichtung auf der Oberfläche ortsaufgelöst bestimmt werden.

In einem Fluoreszenzlaserscanner wird ein Laserstrahl mithilfe eines um eine oder mehrere Achsen verschwenkbaren Spiegels als Teil einer Ablenkeinrichtung über die Oberfläche des Prüfobjekts gerastert. Die Laserstrahlung regt je nach Anwendungsfall die Oberfläche des Prüfobjekts selbst oder eine Substanz auf der Oberfläche, insbesondere eine Verunreinigung oder Beschichtung, zur Fluoreszenz an. Die Ablenkeinrichtung dient neben einer Ablenkung der Anregungsstrahlung und damit dem Rastern der Oberfläche des Prüfobjekts auch einer Ablenkung Fluoreszenzstrahlung auf den Detektor. Die Fluoreszenzstrahlung wird mit dem Detektor erfasst und die Intensität der Fluoreszenzstrahlung bildet ein Maß für das Vorhandensein einer Substanz auf der Oberfläche des Prüfobjekts. Insbesondere ist die Intensität der Fluoreszenzstrahlung zumeist direkt proportional zu einer Dicke einer Schicht einer Substanz auf der zu prüfenden Oberfläche.

In den meisten Anwendungen wird die Oberfläche des Prüfobjekts gerastert bzw. gescannt, wobei die Anregungsstrahlung eine Mehrzahl von Objektpunkten auf der Oberfläche des Prüfobjekts seriell nacheinander beleuchtet, sodass der Detektor die Intensität der von dem jeweiligen Objektpunkt abgestrahlten Fluoreszenzstrahlung ebenfalls seriell erfasst. Für jeden Objektpunkt wird ein Bildpunkt mit einem Wert für die Intensität der Lumineszenzstrahlung und damit insgesamt ein Bild der Oberfläche des Prüfobjekts mit einer ggf. darauf vorhandenen Substanz generiert.

Bei solchen bildgenerierenden Fluoreszenscannern liegen der Strahlengang der Anregungsstrahlung von der Strahlungsquelle bis zu der Oberfläche des Prüfobjekts und der Strahlengang der Lumineszenzstrahlung von der Oberfläche des Prüfobjekts und bis zu dem Detektor räumlich eng beieinander. Dies ist für die meisten Anwendungen unkritisch, da mit Hilfe von Wellenlängenfiltern verhindert werden kann, dass Anregungsstrahlung in den Detektor gelangt. Ein "Übersprechen" von dem Anregungskanal in den Detektorkanal kann ausgeschlossen werden.

Werden ein bildgenerierender Fluoreszenzscanner in einer industriellen Umgebung zum Prüfen der Oberfläche von Prüfobjekten verwendet, so schützt man in der Regel die Komponenten des Systems, d.h. insbesondere die Strahlungsquelle, die Ablenkeinrichtung und den Detektor, in einem Gehäuse mit einer oder mehreren Schutzscheiben. Diese Schutzscheiben sind transparent für die Anregungsstrahlung und die Lumineszenzstrahlung. Verunreinigen gelangen so nicht auf die Komponenten des Systems.

Die Verunreinigungen schlagen sich allerdings häufig auf der oder den Schutzscheiben nieder. Es hat sich gezeigt, dass Verunreinigungen auf einer Schutzscheibe ebenfalls Lumineszenzstrahlung generieren und auch in Abhängigkeit von der Wahl des Materials der Schutzscheibe diese selbst Lumineszenz zeigen kann. Diese so von der Scheibe oder auf einer Oberfläche der Scheibe generierte Lumineszenzstrahlung kann aufgrund der räumlichen Nähe des Strahlengangs der Anregungsstrahlung und des Strahlengangs der Fluoreszenzstrahlung in den Detektor gelangen und das eigentliche Messsignal der Lumineszenzstrahlung von der Oberfläche des Prüfobjekts verfälschen.

Demgegenüber ist es eine Aufgabe der vorliegenden Erfindung, ein System und ein Verfahren zum Prüfen einer Oberfläche eines Prüfobjekts bereitzustellen, welche die zuvor genannten Nachteile vermeiden.

Diese Aufgabe wird erfindungsgemäß durch ein System zum Prüfen einer Oberfläche eines Prüfobjekts gemäß dem darauf gerichteten und beigefügten unabhängigen Anspruch 1 gelöst. Dazu weist das System der eingangs genannten Art weiterhin einen Kanaltrenner auf. Dabei ist in einer ersten Ausführungsform der Kanaltrenner derart ausgestaltet, dass der Kanaltrenner in dem Betrieb des Systems verhindert, dass eine in einer auf einer Oberfläche der Schutzplatte angeordneten Substanz oder in dem Material der Schutzplatte generierte zweite Lumineszenzstrahlung mit einer zweiten Lumineszenzwellenlänge auf den Detektor trifft. In einer alternativen zweiten Ausführungsform ist der Kanaltrenner derart eingerichtet, dass der Kanaltrenner in dem Betrieb des Systems die zweite Lumineszenzstrahlung von der ersten Lumineszenzstrahlung unterscheidbar macht. Dabei ist die zweite Lumineszenzwellenlänge von der Anregungswellenlänge verschieden.

Der Erfindung liegt die Idee zu Grunde, einen Kanaltrenner in dem System bereitzustellen, der dafür sorgt, dass die zweite Lumineszenzstrahlung, die in dem Material der Schutzplatte oder in einer Substanz auf einer Oberfläche der Schutzplatte generiert wird, entweder nicht auf den Detektor trifft oder in dem Intensitätssignal von der ersten Lumineszenzstrahlung von der Oberfläche des Prüfobjekts unterscheidbar ist.

Der Kanaltrenner macht es möglich, dass die Ablenkeinrichtung weiterhin neben einer Ablenkung der Anregungsstrahlung und damit einem Scannen der Oberfläche des Prüfobjekts auch einer Ablenkung der ersten Lumineszenzstrahlung auf den Detektor dient.

Im Sprachgebrauch der vorliegenden Anmeldung wird als erste Lumineszenzstrahlung diejenige Lumineszenzstrahlung bezeichnet, die an der Oberfläche des Prüfobjekts entweder von dem Material der Oberfläche des Prüfobjekts selbst oder in einer Substanz auf dieser Oberfläche generiert wird. Demgegenüber wird als zweite Lumineszenzstrahlung diejenige Lumineszenzstrahlung bezeichnet, die in dem Material der Schutzplatte oder in einer Substanz auf einer Oberfläche der Schutzplatte generiert wird.

Als Schutzplatte wird ein Material verwendet, welches die Anregungsstrahlung auf dem Strahlengang von der Strahlungsquelle über die Ablenkeinrichtung auf die Oberfläche des Prüfobjekts durchlässt. In einer Ausführungsform der Erfindung ist die Schutzplatte auch für die erste Lumineszenzstrahlung transparent. In einer weiteren Ausführungsform weist das System eine erste, für die Anregungsstrahlung transparente Schutzplatte und eine zweite für die erste Lumineszenzstrahlung transparente Schutzplatte auf. In einer Ausführungsform der Erfindung besteht die Schutzplatte aus einem Kunststoff, einem Glas oder einer Keramik. Umgangssprachlich kann man die Schutzplatte auch als Schutzscheibe bezeichnen, wobei die Schutzplatte nicht notwendigerweise im sichtbaren Spektralbereich transparent ist.

In einer Ausführungsform der Erfindung weist das System ein Gehäuse auf, wobei zumindest die Ablenkeinrichtung, vorzugsweise aber auch die Strahlungsquelle und der Detektor in dem Gehäuse angeordnet sind. Dabei ist die Schutzplatte Teil des Gehäuses und ermöglicht es, elektromagnetischer Strahlung aus dem Gehäuse auszutreten und in das Gehäuse einzutreten.

In der vorliegenden Anmeldung wird der Begriff Lumineszenzstrahlung als Oberbegriff verwendet, der elektromagnetische Strahlung umfasst, die durch einen Fluoreszenzprozess oder durch einen Phosphoreszenzprozess generiert wird.

Die erste und die zweite Lumineszenzwellenlänge sind erfindungsgemäß von der Anregungswellenlänge verschieden. Dabei ist die erste Lumineszenzwellenlänge in einer Ausführungsform Bestandteil eines ersten Lumineszenzwellenlängenbereichs mit einer ersten Bandbreite. Beispielsweise ist die erste Lumineszenzwellenlänge die Schwerpunktswellenlänge eines ersten Lumineszenzwellenlängenbereichs. In einer Ausführungsform ist die zweite Lumineszenzwellenlänge Bestandteil eines zweiten Lumineszenzwellenlängenbereichs mit einer zweiten Bandbreite. Beispielsweise ist die zweite Lumineszenzwellenlänge die Schwerpunktswellenlänge eines zweiten Lumineszenzwellenlängenbereichs.

Es versteht sich, dass der Detektor so auszugestalten ist, dass er für die von der Oberfläche des Prüfobjekts abgestrahlte erste Lumineszenzstrahlung sensitiv ist.

Die erste und die zweite Lumineszenzwellenlänge können gleich oder voneinander verschieden sein.

Die Anregungsstrahlung ist typischerweise schmalbandig. Dennoch ist die Anregungswellenlänge in einer Ausführungsform Bestandteil eines Anregungswellenlängenbereichs mit einer Bandbreite. Beispielsweise ist die Anregungswellenlänge die Schwerpunktswellenlänge eines Anregungswellenlängenbereichs.

Es versteht sich, dass die Anregungswellenlänge so zu wählen ist, dass sie innerhalb der Absorptionswellenlängen der zu untersuchenden Substanz in oder auf der Oberfläche des Prüfobjekts liegt, die zu einer Lumineszenz der zu untersuchenden Substanz führen.

Zur Realisierung der Erfindung genügt es, wenn der Anregungswellenlängenbereich und der erste Fluoreszenzwellenlängenbereich nicht vollständig überlappen. Auch dann ist die Lumineszenzwellenlänge von der Anregungswellenlänge verschieden und zumindest ein Teil der ersten Lumineszenzstrahlung lässt sich auf den Detektor leiten.

In einer Ausführungsform der Erfindung wird die erste Lumineszenzstrahlung eines Bildpunkts von genau einem aus der Mehrzahl von Objektpunkten abgestrahlt. In einer solchen Ausführungsform gibt es eine 1 :1-Abbildung der Mehrzahl von Objektpunkten auf die Mehrzahl von Bildpunkten.

Grundsätzlich ist es möglich, mit einem geeigneten Detektor mit einer Mehrzahl von Pixeln gleichzeitig eine Mehrzahl von Bildpunkten zu einer Mehrzahl von Objektpunkten aufzunehmen. In einer Ausführungsform jedoch umfasst der Detektor genau ein Pixel, sodass jeweils nur ein Bildpunkt zu einem Zeitpunkt aufgenommen werden kann. Ein solcher Detektor wird auch als Punktdetektor bezeichnet. In einer solchen Ausführungsform ist die Erfassung aller Objektpunkte vollständig seriell und es wird immer genau ein Objektpunkt zu einem Zeitpunkt beleuchtet und dazu genau ein Bildpunkt zu einem Zeitpunkt mit Hilfe des Detektors generiert. In einer Ausführungsform der Erfindung ist der Detektor ein Photomultiplier (auch Photoelektronenvervielfacher, Englisch photo multiplier tube, kurz PMT).

In einer Ausführungsform ist in einer Strahlrichtung der ersten Lumineszenzstrahlung vor dem Detektor ein dichroitischer Spiegel oder ein dichroitisches Filter angeordnet. Dieses dichroitische Element ist derart ausgestaltet, dass es die erste Lumineszenzstrahlung auf den Detektor treffen lässt, nicht aber die Anregungsstrahlung.

Für die Realisierung des erfindungsgemäßen Kanaltrenners gibt es eine Reihe von Möglichkeiten.

In einer Ausführungsform ist der Kanaltrenner derart ausgestaltet, dass ein Sichtfeld des Detektors einen Auftreffpunkt der Anregungsstrahlung auf der Schutzplatte nicht erfasst. Auf diese Weise ist gewährleistet, dass die zweite Lumineszenzstrahlung nicht mehr oder nur zu einem sehr geringen Teil auf den Detektor gelangt. Ein Übersprechen zwischen dem Kanal für die Anregungsstrahlung und dem Kanal für die erste Lumineszenzstrahlung mittels der zweiten Lumineszenzstrahlung wird zumindest reduziert.

In einer Ausführungsform umfasst der Kanaltrenner eine abbildende Optik, die derart ausgebildet und angeordnet ist, dass sie den Auftreffpunkt der Anregungsstrahlung auf der Schutzplatte nicht auf den Detektor abbildet.

In einer Ausführungsform der Erfindung umfasst der Kanaltrenner ein Trennelement, wobei das Trennelement ein für die zweite Lumineszenzstrahlung intransparentes oder dieses abschwächendes, vorzugsweise um mindestens 50 % bezogen auf Leistung der zweiten Lumineszenzstrahlung abschwächendes, Material aufweist und wobei sich das Trennelement von der Ablenkeinrichtung zu der Schutzplatte erstreckt, sodass in dem Betrieb des Systems die zweite Lumineszenzstrahlung durch das Trennelement an einem Auftreffen auf den Detektor gehindert ist.

Die Realisierung des Kanaltrenners mit einem Trennelement ist insbesondere dann zweckmäßig, wenn die Objektpunkte mit Hilfe der Ablenkeinrichtung nur entlang einer Zeile abgetastet werden. Eine solche Abtastung wird als 1D-Scan bezeichnet. In einer Ausführungsform wird die zweite Dimension des Bildes durch eine Relativbewegung zwischen der Zeile und dem Prüfobjekt generiert. In einer Ausführungsform wird das Prüfobjekt, vorzugsweise senkrecht zu der Zeile, relativ zu der Ablenkeinrichtung bewegt.

In einer Ausführungsform der Erfindung weist daher die Ablenkeinrichtung eine um eine, insbesondere genau eine, Drehachse schwenkbare spiegelnde Fläche auf. In einer Ausführungsform der Erfindung weist die Ablenkeinrichtung eine Mehrzahl von um eine, vorzugsweise genau eine, Drehachse schwenkbaren spiegelnden Flächen auf.

In einer Ausführungsform der Erfindung umfasst die Ablenkreinrichtung einen um eine Drehachse drehbaren Polygonspiegel mit einer Mehrzahl von ebenen, spiegelnden Flächen, wobei der Polygonspiegel derart angeordnet ist, dass die spiegelnden Flächen in dem Betrieb des Systems die Anregungsstrahlung auf die Oberfläche des Prüfobjekts lenken. Ein solcher Polygonspielgel hat in einer Ebene senkrecht zu der Drehachse eine polygonale Querschnittsfläche, wobei die Seiten des Polygons Abschnitte der spiegelnden Fläche des Polygonspiegels sind.

In einer Ausführungsform der Erfindung dient der drehbare Polygonspiegel nicht nur dazu, die Anregungsstrahlung auf die Oberfläche des Prüfobjekts abzulenken und diese zeilenförmig abzurastern, sondern auch dazu, die von der Oberfläche des Prüfobjekts ausgehende erste Lumineszenzstrahlung auf den Detektor zu lenken.

In einer Ausführungsform der Erfindung weist daher der Polygonspiegel eine ringförmige, zur Drehachse rotationssymmetrische Nut auf, wobei die Nut jede aus der Mehrzahl von spiegelnden Flächen in eine erste Teilfläche und eine zweite Teilfläche teilt, wobei die erste Teilfläche die Anregungsstrahlung auf die Oberfläche des Prüfobjekts lenkt und die zweite Teilfläche die erste Lumineszenzstrahlung auf den Detektor lenkt, und wobei sich das Trennelement in die Nut hinein erstreckt. Auf diese Weise stellt das Trennelement eine vollständige Trennung der Strahlpfade für die Anregungsstrahlung und die erste Lumineszenzstrahlung zur Verfügung. Von der Anregungsstrahlung auf oder in dem Material der Schutzplatte generierte zweite Lumineszenzstrahlung kann nicht auf den Detektor gelangen.

In einer Ausführungsform der Erfindung teilt die Nut die spiegelnden Flächen des Polygonspiegels asymmetrisch, wobei die erste Teilfläche für die Anregungsstrahlung jeweils kleiner ist als die zweite Teilfläche. Eine solche Ausgestaltung ist vorteilhaft, da die Anregungsstrahlung in einer Ausführungsform kollimiert ist, während die zweite Lumineszenzstrahlung eine vergleichsweise große Divergenz aufweist.

In einer Ausführungsform der Erfindung erstreckt sich das Trennelement ausgehend von der Schutzplatte bis in die Nut hinein. In einer Ausführungsform der Erfindung ist dabei das Trennelement in Kontakt mit der Schutzplatte.

In einer Ausführungsform der Erfindung ist das Trennelement senkrecht zu der Drehachse und senkrecht zu einer Verbindungslinie zwischen der Drehachse und der Oberfläche der Schutzplatte mindestens so breit wie die Schutzplatte in dieser Richtung. In einer Ausführungsform der Erfindung weist das Trennelement in der Richtung senkrecht zu der Drehachse und senkrecht zu einer Verbindungslinie zwischen der Drehachse und der Oberfläche der Schutzplatte eine Erstreckung von mindestens 5 cm auf.

In einer Ausführungsform der Erfindung ist die erste Lumineszenzwellenlänge von der zweiten Lumineszenzwellenlänge verschieden, wobei der Kanaltrenner ein spektrales Filter aufweist, wobei das spektrale Filter in einer Strahlrichtung der ersten Lumineszenzstrahlung vor dem Detektor angeordnet ist und wobei das spektrale Filter derart ausgestaltet ist, dass es in dem Betrieb des Systems die erste Lumineszenzstrahlung auf den Detektor treffen lässt und die zweite Lumineszenzstrahlung nicht auf den Detektor treffen lässt.

Es versteht sich, dass eine solche Ausgestaltung des Kanaltrenners nur dann in Betracht kommt, wenn gewährleistet werden kann, dass die erste Lumineszenzstrahlung und die zweite Lumineszenzstrahlung voneinander verschiedene Wellenlängen aufweisen, sodass sich die zweite Lumineszenzwellenlänge derart herausfiltern lässt, dass die zweite Lumineszenzstrahlung nicht auf den Detektor trifft.

In einer Ausführungsform der Erfindung ist die Strahlungsquelle derart ausgestaltet, dass sie in dem Betrieb des Systems die Anregungsstrahlung impulsförmig erzeugt, wobei der Kanaltrenner ein zeitliches Signalfilter umfasst. Dieses zeitliche Signalfilter ist derart ausgestaltet, dass es einen zweiten Signalbestandteil des Intensitätssignals des Detektors für jeden aus der Mehrzahl von Bildpunkten aus dem Intensitätssignal herausfiltert, wobei der zweite Signalbestandteil durch die zweite Lumineszenzstrahlung erzeugt ist, sodass das Intensitätssignal nur einen ersten Signalbestandteil umfasst, wobei der erste Signalbestandteil durch die erste Lumineszenzstrahlung erzeugt ist. Ist die Anregungsstrahlung impulsförmig, so lässt sich eine Trennung der zweiten Lumineszenzstrahlung von der ersten Lumineszenzstrahlung durch zeitliche Filterung des Intensitätssignals des Detektors bereitstellen.

Die zuvor genannte Aufgabe wird auch durch ein Verfahren gemäß dem darauf gerichteten und beigefügten unabhängigen Verfahrensanspruch gelöst. Dazu weist das Verfahren der eingangs genannten Art weiterhin die Schritte auf: Erzeugen einer zweiten Lumineszenzstrahlung mit einer zweiten Lumineszenzwellenlänge in der Schutzplatte oder in einem auf einer Oberfläche der Schutzplatte angeordneten Material, wobei die zweite Lumineszenzwellenlänge von der Anregungswellenlänge verschieden ist und Verhindern, dass die zweite Lumineszenzstrahlung in dem Intensitätssignal des Detektors einen zweiten Signalanteil erzeugt, der nicht unterscheidbar ist von einem ersten Signalanteil in dem Intensitätssignal, wobei der erste Signalanteil von der ersten Lumineszenzstrahlung erzeugt wird. Soweit zuvor Aspekte der Erfindung im Hinblick auf das System beschrieben wurden, so gelten diese auch für das entsprechende Verfahren zum Prüfen einer Oberfläche des Prüfobjekts. Soweit das Verfahren mit einem System gemäß dieser Erfindung ausgeführt wird, so weist dieses die entsprechenden Einrichtungen hierfür auf. Insbesondere sind Ausführungsformen des Systems zum Ausführen des Verfahrens geeignet.

Weitere Vorteile, Merkmale und Anwendungsmöglichkeiten der vorliegenden Erfindung werden anhand der folgenden Beschreibung von Ausführungsformen davon und der dazugehörigen Figuren deutlich. In den Figuren sind gleiche Elemente mit identischen Bezugszeichen bezeichnet.
- Figur 1: ist eine schematische Seitenansicht eines nicht erfindungsgemäßen Systems zum Prüfen einer Oberfläche eines Prüfobjekts in einer Blickrichtung parallel zu einer Drehachse eines Polygonspiegels.
- Figur 2: ist eine schematische Seitenansicht des Systems aus Figur 1 in einer Blickrichtung senkrecht zu der Drehachse des Polygonspiegels.
- Figur 3: ist eine schematische Seitenansicht eines erfindungsgemäßen Systems in einer Blickrichtung senkrecht zu der Drehachse des Polygonspiegels.

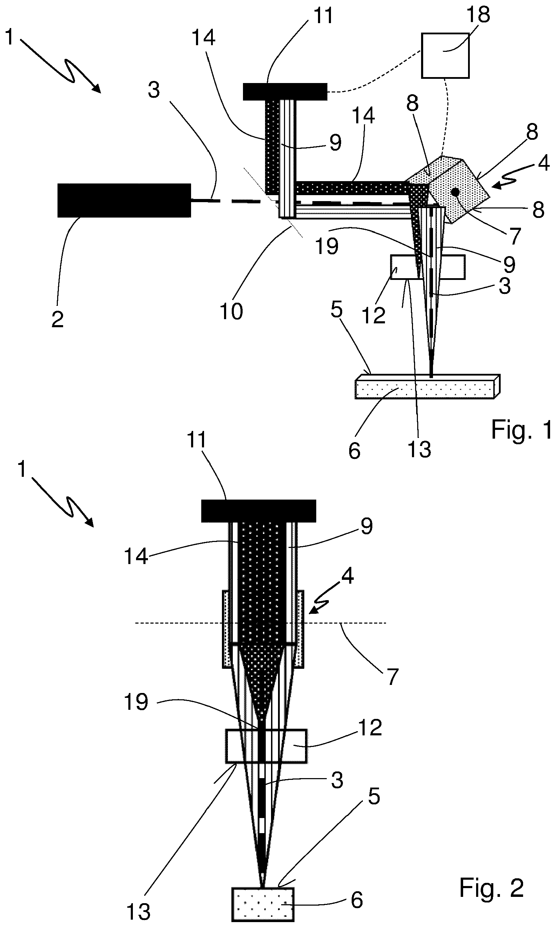

Die Figuren 1 und 2 zeigen schematisch einen Fluoreszenzlaserscanner 1, so wie er der vorliegenden Erfindung zu Grunde liegt. An dieser Darstellung lassen sich die Maßnahmen der Erfindung und ihre Wirkung verstehen.

Der Fluoreszenzlaserscanner 1 umfasst einen Laser 2 als schmalbandige Strahlungsquelle für die elektromagnetische Anregungsstrahlung 3 mit einer Anregungswellenlänge. Die Anregungsstrahlung 3 wird über einen Polygonspielgel 4 als Teil einer Ablenkeinrichtung auf die Oberfläche 5 eines Prüfobjekts 6 abgelenkt. Dieser Polygonspiegel 4 ist motorisch angetrieben. Im Betrieb des Fluoreszenzlaserscanners 1 dreht sich der Polygonspiegel 4 um eine in den Figuren mit dem Bezugszeichen 7 bezeichnete Drehachse. In allen gezeigten Ausführungsformen weist der Polygonspiegel 4 in einer Querschnittsebene senkrecht zu der Drehachse 7 eine quadratische Querschnittsfläche auf. Jede der Seiten des Quadrats bildet einen Abschnitt einer spiegelnden Fläche 8. Der gezeigte Polygonspiegel verfügt daher über vier spiegelnde Flächen 8. Durch die Rotation des Polygonspiegels 4 um die Drehachse 7 wird die Anregungsstrahlung 3 entlang einer Zeile über eine Mehrzahl von Objektpunkten auf der Oberfläche 5 des Prüfobjekts 6 geführt. Diese Scanbewegung der Anregungsstrahlung 3 entlang der Zeile auf der Oberfläche 5 wiederholt sich für jede spiegelnde Fläche 8 des Polygons. Auf diese Weise wird eine sehr schnelle Rasterung der Oberfläche des Prüfobjekts 6 ermöglicht. Bewegt sich zeitgleich das Prüfobjekt 6 in einer Richtung parallel zu der Drehachse 7, so kann ein vollständiger Scan der Oberfläche 5 des Prüfobjekts 6 erfolgen. Darüber hinaus lenkt der Polygonspiegel 4 auch die von den Objektpunkten auf der Oberfläche 5 des Prüfobjekts 6 ausgehende erste Fluoreszenzstrahlung 9 auf den Detektor 11 ab.

Ziel des Fluoreszenzlaserscanners 1 ist es, Fluoreszenzstrahlung 9 von der Oberfläche oder von einem Material auf der Oberfläche 5 des Prüfobjekts 6 zu erfassen. Ein Beispiel dafür ist die Erfassung von ölhaltigen Verunreinigungen auf der Oberfläche 5, wobei das Prüfobjekt 6 ein Blechband ist. Sind auf der Oberfläche 5 Verunreinigungen vorhanden, so werden diese von der Anregungsstrahlung 3 zur Fluoreszenz angeregt und strahlen Fluoreszenzstrahlung 9 ab. Diese Fluoreszenzstrahlung 9 von den Verunreinigungen auf der Oberfläche 5 des Prüfobjekts 6 werden als erste Fluoreszenzstrahlung 9 bezeichnet. Die erste Fluoreszenzstrahlung 9 gelangt dann von der Oberfläche 5 des Prüfobjekts 6 und eine der spiegelnden Flächen 8 des Polygonspiegels 4 sowie einen dichroitischen Strahlteiler 10 auf einen Detektor 11 für die Fluoreszenzstrahlung 9. Der Strahlteiler 10 trennt den Strahlengang der Anregungsstrahlung 3 von dem Strahlengang der ersten Fluoreszenzstrahlung 9. Der Strahlengang der Anregungsstrahlung 3 einerseits und der Strahlengang der ersten Fluoreszenzstrahlung 9 überlappen einander räumlich.

Um den Fluoreszenzlaserscanner 1 in einer Produktionsumgebung einsetzen zu können, sind die Komponenten des Scanners 1, nämlich der Laser 2, der Detektor 11, der Strahlteiler 10, und der Polygonspiegel 4 vor Umgebungseinflüssen durch ein Gehäuse (in den Figuren nicht gezeigt) geschützt. Dennoch müssen die Anregungsstrahlung 3 aus dem Gehäuse austreten und die erste Fluoreszenzstrahlung 9 in das Gehäuse eintreten können. Dazu ist als Teil des Gehäuses in dem Strahlengang der Anregungsstrahlung 3 zwischen dem Polygonspiegel 4 und der Oberfläche 5 des Prüfobjekts 6 eine Schutzscheibe 12 als Schutzplatte vorgesehen. Diese Schutzscheibe 12 ist in das Gehäuse des Laserscanners 1 eingelassen. Die Schutzscheibe 12 ist für die Anregungsstrahlung 3 transparent und lässt diese durch. In der gezeigten Ausführungsform ist die Schutzscheibe 12 auch für die erste Fluoreszenzstrahlung 9 transparent. In einer alternativen Ausführungsform könnte aber auch eine Schutzscheibe 12 für die Anregungsstrahlung 3 und daneben eine Schutzscheibe für die erste Fluoreszenzstrahlung 9 vorgesehen sein.

Eine Steuer- und Auswerteeinrichtung 18 ist mit dem Detektor 11 und dem Polygonspiegel 4 verbunden. Die Steuer- und Auswerteeinrichtung 18 steuert die Drehung des Polygonspiegels 4 und synchronisiert diese auf die Linearbewegung des Prüfobjekts 6 in einer Richtung parallel zur Drehachse 7. Zudem verarbeitet die Steuer- und Auswerteeinrichtung 18 die Intensitätssignale der ersten Fluoreszenzstrahlung 9 für die einzelnen Objektpunkte in der Zeile zu einem Bild.

In der hier betrachteten Anwendung des Systems 1 kommt es in einer Produktionsumgebung dazu, dass sich die mit Hilfe des Fluoreszenzlaserscanners auf der Oberfläche 5 des Prüfobjekts zu erfassenden Verunreinigungen auch auf einer Außenfläche 13 der Schutzscheibe 12 und bei einer Undichtigkeit des Gehäuses möglicherweise sogar auf einer Innenfläche der Schutzscheibe 12 ablagern. Auch Staub im Inneren des Gehäuses kann zu einer Fluoreszenzstrahlung generierenden Verunreinigung auf der Innenfläche der Schutzscheibe 12 führen.

Bildet sich eine solche Ablagerung im Bereich des Strahlengangs der Anregungsstrahlung 3, so wird an diesem Ort eine zweite Fluoreszenzstrahlung 14 generiert. Gelangt diese zweite Fluoreszenzstrahlung 14 auf den Detektor 11, so ist sie dort nicht ohne weitere Maßnahmen von der ersten Fluoreszenzstrahlung 9 zu unterscheiden und verfälscht das Intensitätssignal für jeden Bildpunkt erheblich. Da der Strahlengang der Anregungsstrahlung 3 einerseits und ein Strahlengang der von dem Detektor 11 erfassten ersten Fluoreszenzstrahlung 9 einander überlappen, gelangt immer auch die zweite Fluoreszenzstrahlung 14 auf den Detektor 11. Dies ist besonders gut in Figur 2 zu erkennen. Dabei zeigt Figur 2 den Fluoreszenzlaserscanner 1 aus Figur 1, jedoch in einer Ansicht mit Blickrichtung senkrecht auf die Drehachse 7 des Polygonspiegels 4.

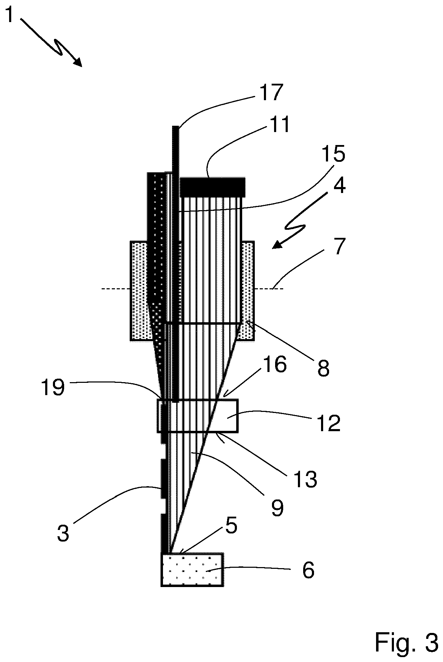

Um dieses "Übersprechen" aus dem Kanal für die Anregungsstrahlung 3 in den Kanal der ersten Fluoreszenzstrahlung 9 zu verhindern, sieht die vorliegende Erfindung einen Kanaltrenner vor. Figur 3 ist eine Darstellung eines erfindungsgemäßen Systems 1 in der gleichen Blickrichtung wie Figur 2.

In der in Figur 3 dargestellten Ausführungsform ist der Kanaltrenner durch ein Trennelement 15 realisiert. Das Trennelement 15 ist ein metallisches Blech, welches grundsätzlich verhindert, dass Anteile der zweiten, an der Außenfläche 13 der Schutzscheibe 12 generierten zweiten Fluoreszenzenzstrahlung 14 auf den Detektor 11 für die erste Fluoreszenzstrahlung 9 gelangen können. Das Trennelement 15 erstreckt sich von einer Innenfläche 16 der Schutzscheibe 12 bis zu dem Polygonspiegel 4. Dabei weist der Polygonspiegel 4 im Bereich des Trennelements 15 eine ringförmige Nut auf, bis in die hinein sich das Blech 15 erstreckt. Das Blech 15 ist von seinem oberen Ende 17 her U-förmig ausgeformt, sodass sich das Blech auf drei Seiten in die Nut des Polygonspiegels 4 hinein erstreckt.

Das Trennelement 15 schränkt das Sichtfeld des Detektors 11 derart ein, dass der Auftreffpunkt 19 der Anregungsstrahlung 3 auf der Schutzscheibe 12 und damit die von einer Verunreinigung auf der Schutzscheibe 12 im Strahlengang der Anregungsstrahlung 3 ausgehende zweite Fluoreszenzstrahlung 14 nicht von dem Detektor 11 erfasst wird.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichenliste

- 1: Fluoreszenzlaserscanner
- 2: Laser
- 3: Anregungsstrahlung
- 4: Polygonspiegel
- 5: Oberfläche
- 6: Prüfobjekt
- 7: Drehachse
- 8: spiegelnde Fläche
- 9: erste Fluoreszenzstrahlung
- 10: Strahlteiler
- 11: Detektor
- 12: Schutzscheibe
- 13: Außenfläche der Schutzscheibe
- 14: zweite Fluoreszenzstrahlung
- 15: Blech
- 16: Innenfläche
- 17: oberes Ende
- 18: Steuer- und Auswerteeinrichtung
- 19: Auftreffpunkt

## Patentansprüche

1. System (1) zum Prüfen einer Oberfläche (5) eines Prüfobjekts (6) mit
einer Strahlungsquelle (2),
wobei die Strahlungsquelle (2) derart eingerichtet ist, dass die Strahlungsquelle (2) in einem Betrieb des Systems (1) elektromagnetische Anregungsstrahlung (3) mit einer Anregungswellenlänge erzeugt und abstrahlt,
einem Detektor (11),
wobei der Detektor (11) derart angeordnet und eingerichtet ist, dass der Detektor (11) in dem Betrieb des Systems (1) jeweils eine Intensität einer elektromagnetischen ersten Lumineszenzstrahlung (9) für eine Mehrzahl von Bildpunkten erfasst,
wobei die erste Lumineszenzstrahlung (9) eines Bildpunkts jeweils von einem aus der Mehrzahl von Objektpunkten abgestrahlt wird, und
wobei die erste Lumineszenzstrahlung (9) eine von der Anregungswellenlänge verschiedene erste Lumineszenzwellenlänge aufweist,
einer Ablenkeinrichtung (4),
wobei die Ablenkeinrichtung (4) derart angeordnet und eingerichtet ist, dass mit der Ablenkeinrichtung (4) in dem Betrieb des Systems (1) die Anregungsstrahlung (3) zeitlich nacheinander auf eine Mehrzahl von Objektpunkten auf der Oberfläche (5) des Prüfobjekts (6) ablenkbar ist, und dass mit der Ablenkeinrichtung (4) in dem Betrieb des Systems (1) die zeitlich nacheinander von der Mehrzahl von Objektpunkten abgestrahlte erste Lumineszenzstrahlung (9) auf den Detektor (11) ablenkbar ist,
einer Schutzplatte (12),
wobei die Schutzplatte (12) ein für die Anregungsstrahlung (3) transparentes Material umfasst und
wobei die Schutzplatte (12) in einer Strahlrichtung der Anregungsstrahlung (3) betrachtet hinter der Ablenkeinrichtung (4) angeordnet ist, und
einer Steuer- und Auswerteeinrichtung (18),
wobei die Steuer- und Auswerteeinrichtung (18) derart wirksam mit dem Detektor (11) verbunden ist, dass in dem Betrieb des Systems (1) die Steuer- und Auswerteeinrichtung (18) von dem Detektor (11) jeweils ein Intensitätssignalfür jeden aus der Mehrzahl von Bildpunkten empfängt, wobei das Intensitätssignal die Intensität der ersten Lumineszenzstrahlung (9) des jeweiligen Objektpunkts repräsentiert,
**dadurch gekennzeichnet, dass**
das System (1) weiterhin einen Kanaltrenner (15) aufweist,
wobei der Kanaltrenner (15) entweder
derart ausgestaltet ist, dass der Kanaltrenner (15) in dem Betrieb des Systems (1) verhindert, dass eine in einer auf einer Oberfläche (5) der Schutzplatte (12) angeordneten Substanz oder in dem Material der Schutzplatte (12) generierte zweite Lumineszenzstrahlung (9) mit einer zweiten Lumineszenzwellenlänge auf den Detektor (11) trifft,
oder
derart eingerichtet ist, dass der Kanaltrenner (15) in dem Betrieb des Systems (1) die zweite Lumineszenzstrahlung (14) von der ersten Lumineszenzstrahlung (9) unterscheidbar macht,
wobei die zweite Lumineszenzwellenlänge von der Anregungswellenlänge verschieden ist.

2. System (1) nach dem vorhergehenden Anspruch, wobei der Kanaltrenner derart ausgestaltet ist, dass ein Sichtfeld des Detektors (11) einen Auftreffpunkt (19) der Anregungsstrahlung (3) auf der Schutzplatte (4) nicht erfasst.

3. System (1) nach einem der vorhergehenden Ansprüche, wobei der Kanaltrenner ein Trennelement (15) umfasst,
wobei das Trennelement (15) ein für die zweite Lumineszenzstrahlung (14) intransparentes Material aufweist und
wobei sich das Trennelement (15) von der Ablenkeinrichtung (4) zu der Schutzplatte (12) erstreckt, so dass in dem Betrieb des Systems (1) die zweite Lumineszenzstrahlung (14) durch das Trennelement (15) an einem Auftreffen auf den Detektor (11) gehindert ist.

4. System (1) nach dem vorhergehenden Anspruch, wobei die Ablenkeinrichtung (4) eine um eine Drehachse (7) drehbare spiegelnde Fläche (8) aufweist.

5. System (1) nach dem vorhergehenden Anspruch, wobei die Ablenkeinrichtung (4) einen um eine Drehachse (7) drehbaren Polygonspiegel (4) mit einer Mehrzahl von ebenen, spiegelnden Flächen (8) umfasst, wobei der Polygonspiegel (4) derart angeordnet ist, dass die spiegelnden Flächen (8) in dem Betrieb des Systems (1) die Anregungsstrahlung (3) auf die Oberfläche (5) des Prüfobjekts (6) und die erste Lumineszenzstrahlung (9) auf den Detektor (11) lenken.

6. System (1) nach dem vorhergehenden Anspruch, wobei der Polygonspiegel (4) eine ringförmige, zur Drehachse (7) rotationssymmetrische Nut aufweist, wobei die Nut jede aus der Mehrzahl von spiegelnden Flächen (8) in eine erste Teilfläche und eine zweite Teilfläche teilt, wobei die erste Teilfläche die Anregungsstrahlung (3) auf die Oberfläche (5) des Prüfobjekts (6) lenkt und die zweite Teilfläche die erste Lumineszenzstrahlung (9) auf den Detektor (11) lenkt, und wobei sich das Trennelement (15) in die Nut hinein erstreckt.

7. System (1) nach dem vorhergehenden Anspruch, wobei sich das Trennelement (15) ausgehend von der Schutzplatte (12) bis in die Nut hinein erstreckt.

8. System (1) nach einem der vorhergehenden Ansprüche, wobei die erste Lumineszenzwellenlänge von der zweiten Lumineszenzwellenlänge verschieden ist, wobei der Kanaltrenner (15) ein spektrales Filter aufweist, wobei das spektrale Filter in einer Strahlrichtung der ersten Lumineszenzstrahlung (9) vor dem Detektor (11) angeordnet ist und wobei das spektrale Filter derart ausgestaltet ist, dass es die erste Lumineszenzstrahlung (9) auf den Detektor (11) treffen lässt und die zweite Lumineszenzstrahlung (14) nicht auf den Detektor (11) treffen lässt.

9. System (1) nach einem der vorhergehenden Ansprüche, wobei die Strahlungsquelle (2) derart ausgestaltet ist, dass sie in dem Betrieb des Systems (1) die Anregungsstrahlung (3) impulsförmig erzeugt, wobei der Kanaltrenner (15) ein zeitliches Signalfilter umfasst, wobei das Signalfilter derart ausgestaltet ist, dass es einen zweiten Signalbestandteil des Intensitätssignals des Detektors (11) für jeden aus der Mehrzahl von Bildpunkten aus dem Intensitätssignal herausfiltert, wobei der zweite Signalbestandteil durch die zweite Lumineszenzstrahlung (14) erzeugt ist, so dass das Intensitätssignal nur einen ersten Signalbestandteil umfasst, wobei der erste Signalbestandteil durch die erste Lumineszenzstrahlung (9) erzeugt ist.

10. Verfahren zum Prüfen einer Oberfläche (5) eines Prüfobjekts (6) mit den Schritten
Erzeugen und Abstrahlen von elektromagnetischer Anregungsstrahlung (3) mit einer Anregungswellenlänge mittels einer Strahlungsquelle (2),
Ablenken der Anregungsstrahlung (3) zeitlich nacheinander auf eine Mehrzahl von Objektpunkten auf der Oberfläche (5) des Prüfobjekts (6) mittels einer Ablenkeinrichtung (4),
Ablenken einer zeitlich nacheinander von jeweils einem Objektpunkt aus der Mehrzahl von Objektpunkten abgestrahlten elektromagnetischen ersten Lumineszenzstrahlung (9) auf den Detektor (11) mittels der Ablenkeinrichtung (4),
Erfassen jeweils einer Intensität der ersten Lumineszenzstrahlung (9) für eine Mehrzahl von Bildpunkten mittels eines Detektors,
wobei die erste Lumineszenzstrahlung (9) eine von der Anregungswellenlänge verschiedene erste Lumineszenzwellenlänge aufweist, Ausgeben jeweils eines Intensitätssignals für jeden aus der Mehrzahl von Bildpunkten,
wobei das Intensitätssignal die Intensität der ersten Lumineszenzstrahlung des jeweiligen Objektpunkts repräsentiert, und
Schützen zumindest der Strahlungsquelle (2) oder der Ablenkeinrichtung (4) vor Umgebungseinflüssen mittels einer Schutzplatte (12),
wobei die Schutzplatte (12) für die Anregungsstrahlung (3) transparent ist und
wobei die Schutzplatte (12) in einer Strahlrichtung der Anregungsstrahlung (3) betrachtet zwischen der Strahlungsquelle (2) und der Oberfläche (5) des Prüfobjekts (6) angeordnet ist,
**dadurch gekennzeichnet, dass** das Verfahren weiterhin die Schritte aufweist
Erzeugen einer zweiten Lumineszenzstrahlung (14) mit einer zweiten Lumineszenzwellenlänge in der Schutzplatte (12) oder in einem auf einer Oberfläche (5) der Schutzplatte (12) angeordneten Material,
wobei die zweite Lumineszenzwellenlänge von der Anregungswellenlänge verschieden ist, und
Verhindern, dass die zweite Lumineszenzstrahlung (14) in dem Intensitätssignal des Detektors (11) einen zweiten Signalanteil erzeugt, der nicht unterscheidbar ist von einem ersten Signalanteil in dem Intensitätssignal, wobei der erste Signalanteil von der ersten Lumineszenzstrahlung (9) erzeugt wird.
